**Europäisches Patentamt**

**European Patent Office**

**Office européen des brevets**

(11) Veröffentlichungsnummer: **0 229 278**
**A1**

(12) # EUROPÄISCHE PATENTANMELDUNG

(21) Anmeldenummer: **86116518.1**

(22) Anmeldetag: **27.11.86**

(51) Int. Cl.³: **B 65 G 17/42**
**B 65 G 17/12**

(30) Priorität: **13.12.85 DE 3544106**

(43) Veröffentlichungstag der Anmeldung:
**22.07.87 Patentblatt 87/30**

(84) Benannte Vertragsstaaten:
**ES FR GB NL SE**

(71) Anmelder: **O & K Orenstein & Koppel Aktiengesellschaft**
**Brunsbütteler Damm 144**
**D-1000 Berlin(DE)**

(72) Erfinder: **Mohr, Helmut, Dipl.-Ing.**
**Mendelstrasse 4**
**D-4100 Duisburg 46(DE)**

(72) Erfinder: **Krüger, Rolf, Dipl.-Ing.**
**Kronsforder Koppel 22**
**D-2400 Lübeck(DE)**

(74) Vertreter: **Möllering, Karl Friedrich**
**Elsässer Strasse 31**
**D-2400 Lübeck(DE)**

(54) **Befestigungsvorrichtung für die Grundplatte von Bechern an einem Gurt.**

(57) Befestigungsvorrichtung für die Grundplatte (2) von Bechern an einem Gurt (3) mit Hilfe von Spezialschrauben, (5,6) deren Tellerköpfe (9) der Rückseite des Gurtes in armierten kugelförmigen Einsenkungen (8) anliegen und deren Schäfte den Gurt in Durchgangslöchern (7) durchsetzen, wobei zwischen der Grundplatte des Bechers und dem Gurt gewebe- oder metallverstärkte Gummistollen (4) angebracht sind, die in Förderrichtung gesehen mit hinter der Grundplatte liegenden Knaggen (15) versehen sind, die der rückwärtigen Kante der Grundplatte des Bechers (1) anliegen.

FIG.2

EP 0 229 278 A1

Dr. rer. pol. Dr.-Ing. Karl F. Möllering
PATENTANWALT

Dr. Dr. Mö/Fa
PAT 5894   0229278

**O&K Orenstein & Koppel Aktiengesellschaft, Berlin**

Befestigungsvorrichtung für die Grundplatte
von Bechern an einem Gurt.

Die Erfindung betrifft eine Befestigungsvorrichtung für die Grundplatte von Bechern an einem Gurt mit Hilfe von Spezialschrauben, deren Tellerköpfe der Rückseite des Gurtes in armierten kugelförmigen Einsenkungen anliegen und deren Schäfte den Gurt in Durchgangslöchern durchsetzen.

Derartige Befestigungsvorrichtungen sind in DIN 15236, Teil 1, April 1980, beschrieben. Diese Befestigungsart ist für alle möglichen Becherwerke geeignet, so z. B. für Schüttgut-Senkrechtförderung, für kontinuierliche Schiffsentladung etc.

Die Erfindung erstrebt eine sichere, elastische Verbindung des Bechers am Gurt, insbesondere für Schnelläufer. Die bisher bekannte Befestigung arbeitete praktisch nur für einreihige Befestigungen von Bechern kleinen Inhaltes zur Zufriedenheit. Der Erfindung liegt insbesonere die Aufgabe zugrunde, eine elastische, zwangsfreie Befestigung von großvolumigen Bechern zu schaffen und dabei die Befestigungsschrauben vom Lochleibungsdruck zu entlasten.

a73178512033101

Dr. rer. pol. Dr.-Ing. Karl F. Möllering
PATENTANWALT

- 2 -

0229278

Die Erfindung löst die gestellte Aufgabe durch die Merkmale des Hauptanspruchs. Weitere vorheilhafte Ausführungsformen der Erfindung sind Gegenstand der Unteransprüche. Gemäß der Erfindung sind an den Befestigungspositionen der Becher auf dem Gurt gewebe- oder metallverstärkte Gummistollen angebracht. Dabei sind die Durchgangslöcher im Gurt so groß gehalten, daß sich die Schrauben beim Krümmungsdurchlauf auf denen durch die feste Grundplatte vorgegebenen Lochabstand zwangsfrei geneigt einstellen können. Die Gummistollen sind mit Schubübertragungsknaggen versehen, denen die Grundplatte des Bechers mit einer Kante anliegt. Die Grundplatte kann jeweils mit zwei Spezialschrauben auf dem Gurt befestigt sein, wobei sich die Gesamtschraubenzahl pro Becher nach dem jeweiligen Bedarf richtet.

Weitere Einzelheiten der Erfindung sind anhand des in der Zeichnung schematisch dargestellten Ausführungsbeispiels erläutert, und zwar zeigen

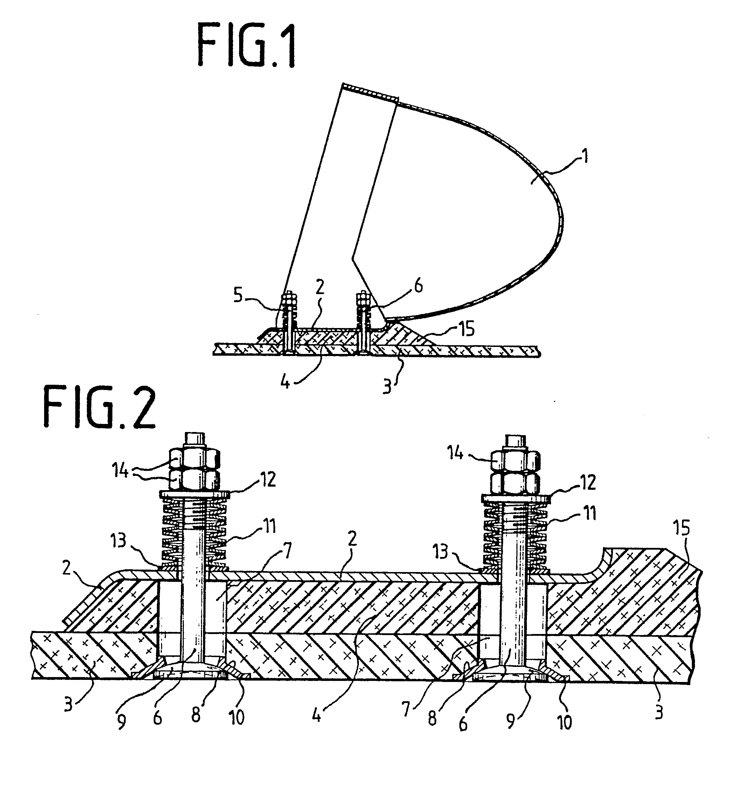

Fig. 1  an einem Gurt befestigten Becher in geschnittener Seitenansicht

Fig. 2  deren unteren mittleren Teil der Fig. 1, nämlich die Befestigungsplatte des Bechers samt dem anliegenden Gurt im vergrößerten Maßstab im Schnitt

Der Becher 1 ist mit einer Grundplatte 2 versehen, die zur Befestigung am Gurt 3 dient. Zwischen der Grundplatte 2 des Bechers 1 und dem Gurt 3 sind gewebe- oder metallverstärkte Gummistollen 4 eingelegt. Zur Befestigung der Grundplatte 2 dienen beim Ausführungsbeispiel zwei Spezialschrauben 5 und 6, die beim Ausführungsbeispiel in Gurtrichtung gesehen hintereinander liegen. Die Spezialschrauben 5 und 6 sind als Tellerschrauben ausgebildet und in Durchgangslöcher 7 sowohl im Gurt 3 als auch

Dr. rer. pol. Dr.-Ing. Karl F. Möllering
PATENTANWALT

0229278

- 3 -

in Gummistollen 4 eingesetzt, wobei der Durchmesser der Durchgangslöcher 7 größer ist als der Schaftdurchmesser der Tellerschrauben. Die Durchgangslöcher 7 sind so groß gehalten, daß sich die Schraubenschäfte beim Krümmungsdurchlauf auf den durch die feste Grundplatte 2 vorgegebenen Lochabstand zwangsweise geneigt einstellen können, ohne daß dabei die Schraubenschäfte die Wände der Durchgangslöcher 7 berühren.

Der Gurt 3 ist im Bereich der Durchgangslöcher 7 auf seiner Rückwand - also der der Grundplatte 2 gegenüber liegenden Wand - kegelförmig eingesenkt. In dieser Einsenkung 8 sind die kugelförmig ausgebildeten Tellerköpfe 9 der Spezialschrauben 5 und 6 unter Zwischenlage von Kugelpfannenscheiben 10 eingesetzt. Diese Kugelpfannenscheiben 10 können aus Rotguß bestehen.

Die Einsenkung 8 und die Kugelpfannenscheiben 10 sind derart ausgebildet, daß die Oberfläche des Tellerkopfes 9 mit der Unterseite des Gurtes 3 fluchtet.

Bei dieser Befestigungsart sind die Durchgangslöcher 7 im Gurt 3 bzw. in dem Gummistollen 4 so groß gehalten, daß sich die Spezialschrauben 5 und 6, deren Abstand durch den Lochabstand in der Grundplatte 2 festgelegt ist, zwangsfrei geneigt einstellen können, so daß die Spezialschrauben 5 und 6 vom Lochleibungsdruck oder anderen Zwängungen entlastet sind.

Der beim Krümmungsdurchlauf vergrößerte Abstand zwischen der Grundplatte 2 und Unterseite des Gurtes 3 wird durch ein Tellerfederpaket 11 bzw. Tellerfedern mit Begrenzungsscheiben 12 und 13 aufgenommen, die zwischen den Schraubenmuttern 14 und der Grundplatte 2 eingesetzt sind.

Am in Laufrichtung gesehen hinteren Ende der Gummistollen 4 sind Knaggen 15 vorgesehen, die der rückwärtigen Kante der Grundplatte 2 des Bechers 1 anliegen und beispielsweise bei Aufwärtsförderung

a7317851203310l

Dr. rer. pol. Dr.-Ing. Karl F. Möllering
PATENTANWALT

0229278

- 4 -

der Becher 1 die lotrechten Kräfte ohne Inanspruchnahme der Tellerschrauben auf deren Lochleibung auf den Gurt übertragen werden.

Beim Ausführungsbeispiel bilden die Gummistollen 4 gesonderte Bauteile. Sie können in einer anderen Ausführungsform auch einstückig mit dem Gurt 3 geformt sein. Die Gummistollen 4 können z. B. nur jeweils im Bereich der Durchgangslöcher 7 angebracht sein. Gemäß einer anderen vorteilhaften Bauform erstrecken sich die Gummistollen 4 über die gesamte Breite der Grundplatte 2.

a7317851203101

Dr. rer. pol. Dr.-Ing. Karl F. Möllering
PATENTANWALT

Lübeck, den 09.12.85
Dr. Dr. Mö/Ha
PAT 5894  0229278

- 1 -

O&K Orenstein & Koppel Aktiengesellschaft, Berlin

A n s p r ü c h e

1. Befestigungsvorrichtung für die Grundplatte von Bechern an einem Gurt mit Hilfe von Spezialschrauben, deren Tellerköpfe der Rückseite des Gurtes in armierten kugelförmigen Einsenkungen anliegen und deren Schäfte den Gurt in Durchgangslöchern durchsetzen, dadurch gekennzeichnet, daß zwischen der Grundplatte (2) des Bechers (1) und dem Gurt (3) gewebe- oder metallverstärkte Gummistollen (4) angebracht sind, die in Förderrichtung gesehen mit hinter der Grundplatte (2) liegenden Knaggen (15) versehen sind, die der rückwärtigen Kante der Grundplatte (2) des Bechers (1) anliegen.

2. Befestigungsvorrichtung nach Anspruch 1, dadurch gekennzeichnet, daß die Gummistollen (4) einstückig mit dem Gurt (3) geformt sind.

3. Befestigungsvorrichtung nach Anspruch 1 und 2, dadurch gekennzeichnet, daß die Gummistollen (4) sich über die gesamte Breite der Grundplatte (2) erstrecken.

4. Befestigungsvorrichtung nach Anspruch 1 bis 3, dadurch gekennzeichnet, daß die Durchgangslöcher (7) im Gurt (3) und in den Gummistollen (4) einen größeren Durchmesser, als die Schäfte der Spezialschrauben (5,6) haben.

a7317851209301

0229278

5. Befestigungsvorrichtung nach Anspruch 1 bis 4, dadurch gekennzeichnet, daß die Tellerköpfe (9) der Spezialschrauben (5,6) kugelig ausgebildet und mit untergelegten Kugelpfannenscheiben (10) versehen sind.

6. Befestigungsvorrichtung nach Anspruch 5, dadurch gekennzeichnet, daß die Kugelpfannenscheiben (10) aus Rotguß oder ähnlichem Werkstoff bestehen.

7. Befestigungsvorrichtung nach Anspruch 4 und 5, dadurch gekennzeichnet, daß die Kugelpfannenscheiben (10) im Gurt (3) versenkt angeordnet sind, so daß die Oberfläche des Tellerkopfes (9) mit der Gurtoberfläche fluchtet.

8. Befestigungsvorrichtung nach Anspruch 1 bis 7, dadurch gekennzeichnet, daß zwischen der Schraubenmutter (14) der Spezialschraube (5,6) und der Grundplatte (2) des Bechers Tellerfedern bzw. ein Tellerfederpaket (11) angeordnet ist.

a7317851209310l

# FIG.1

# FIG.2

**Europäisches Patentamt**

**EUROPÄISCHER RECHERCHENBERICHT**

**0229278**

Nummer der Anmeldung

EP 86 11 6518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-U-1 985 975 (CONRAD SCHOLTZ AG) <br> * Seite 3, Zeilen 6-25; Figur * | 1,5,7 | B 65 G 17/42 <br> B 65 G 17/12 |
| A | DE-U-1 985 276 (B. BEUMER MASCHINENFABRIK KG) <br> * Seite 1, Zeile 9 - Seite 2, Zeile 8; Figur * | 1 | |
| A | DE-U-1 952 774 (B. BEUMER MASCHINENFABRIK KG) <br> * Seite 2, Zeilen 12-19; Figur * | 1 | |
| A | DE-U-1 837 067 (BEUMER) <br> * Seite 1, Zeilen 15-18; Figur 2 * | 2,3 | |
| D,A | DEUTSCHE NORMEN, Teil 1, Nr. 15236, April 1980, Berlin | 1 | RECHERCHIERTE SACHGEBIETE (Int Cl 4) <br><br> B 65 G 17/00 |

Der vorliegende Recherchenbericht wurde für alle Patentansprüche erstellt.

| Recherchenort | Abschlußdatum der Recherche | Prüfer |
|---|---|---|
| BERLIN | 27-02-1987 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument